# EUROPEAN PATENT SPECIFICATION

(11) **EP 3 048 470 B1**
(45) Date of publication and mention of the grant of the patent: **06.11.2019**
(21) Application number: 13893801.4
(22) Date of filing: 18.09.2013
(51) Int. Cl.: G02C 1/02, G02C 5/02, G02C 5/12, G02C 13/00

(54) **MODULAR GLASSES AND METHOD FOR MANUFACTURING SAME**
MODULARE BRILLE UND VERFAHREN ZUR HERSTELLUNG DAVON
LUNETTES MODULAIRES ET LEUR PROCÉDÉ DE FABRICATION

(43) Date of publication of application: 27.07.2016
(73) Proprietor: Leung, Yuet-Charn, N. T. Hong Kong (CN)
(72) Inventor: Leung, Yuet-Charn, N. T. Hong Kong (CN)
(74) Representative: Viering, Jentschura & Partner mbB Patent- und Rechtsanwälte
(86) International application number: PCT/CN2013/001109
(87) International publication number: WO 2015/039262

(56) References cited:
- WO-A2-2012/005509
- CN-A- 101 174 033
- CN-A- 101 234 514
- CN-A- 102 122 083
- CN-U- 203 149 213
- DE-A1- 4 439 434
- JP-A- 2004 177 917
- US-A- 2 058 808
- US-A- 6 017 119
- US-A1- 2009 051 868
- US-B1- 7 789 506
- US-B1- 8 157 372
- US-B1- 8 157 372

## Description

### 1. Field of the Invention

The present invention relates to an eyewear, and more particularly to a modular eyewear.

### 2. Description of Related Art

A conventional eyewear substantially comprises two lenses, a lens frame and two temples and is joined together permanently in a factory. Thus, the conventional eyewear cannot be customized at a low cost and cannot be attached with accessories conveniently for different users' needs.

In addition, US Patent No. 8157372, entitled "Lens Connection Device for an Eyewear" discloses a connection device and method for a rimless eyewear, but the '372 Patent is a permanent joint that cannot be dissembled easily, nor can it be attached with accessories, such as lens frames or attached type sunglasses and is not versatile in use.

The main objective of the invention is to provide a modular eyewear that can be dissembled easily and attached with accessories conveniently, can be customized at a lower cost, and is versatile in use.

A modular eyewear in accordance with the preset invention is as defined in claim 1.

With the aforementioned features, the present invention can achieve the following functions:
1. The eyewear in accordance with the present invention has a simplified structure and can be conveniently assembled with accessories. The cost for manufacturing eyewear in the customized manner can be reduced. The utility and versatility of the eyewear can be improved.
2. The connection device can be securely connected with the lenses and can be easily detached from the lenses with specific tools. To repair the eyewear is easy and convenient.

### IN THE DRAWINGS

Fig. 1 is an exploded perspective view of a modular eyewear in accordance with the present invention;
Fig. 2 is an enlarged side view in partial section of the eyewear in Fig. 1; and
Fig. 3 is an operational perspective view of a drilling device for drilling a blind hole in a lens of the eyewear in Fig. 1 at a first stage;
Fig. 4 is an operational perspective view of the drilling device for drilling a round hole in the lens of the eyewear in Fig. 1 at a second stage;
Fig. 5 is an operational perspective view of a cutting device for cutting two engaging segments in the lens of the eyewear in Fig. 1;
Fig. 6 is a perspective view of a first embodiment of a cutter for the cutting device in Fig. 5;
Fig. 7 is a perspective view of a second embodiment of a cutter for the cutting device in Fig. 5;
Fig. 8 is a perspective view of a pulling device for the eyewear in Fig. 1;
Fig. 9 is an exploded perspective view of the pulling device in Fig. 8;
Fig. 10 shows operational side views in partial section of the pulling device in Fig. 7 for pulling a plug into a connection hole in a lens of the eyewear in Fig. 1;
Fig. 11 is a perspective view of a screw driver for the eyewear in Fig. 1;
Fig. 12 is an exploded perspective view of the screw driver in Fig. 11; and
Figs. 13 to 20 show exploded perspective views of the eyewear in Fig. 1 combined with different accessories.

Other objects, advantages and novel features of the invention will become more apparent from the following detailed description when taken in conjunction with the accompanying drawings.

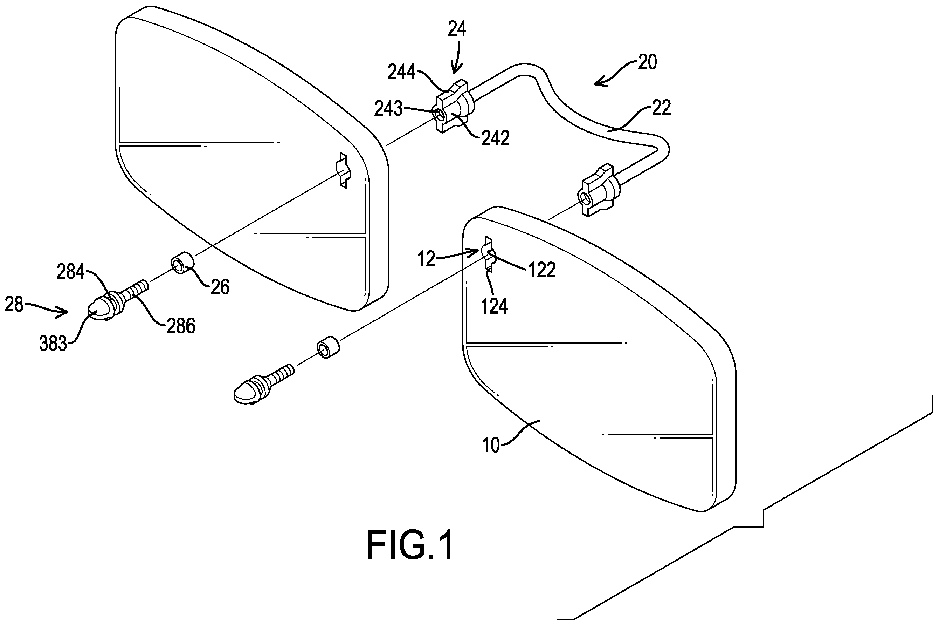

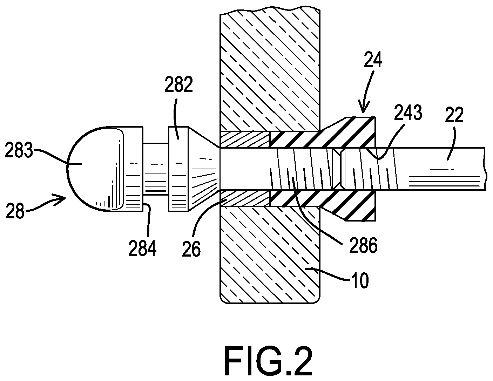

With reference to Figs. 1 and 2, a modular eyewear in accordance with the present invention comprises two lenses 10 and a connection device 20. Each lens 10 has a noncircular connection hole 12 defined through the lens 10 for connecting with the connection device 20. Each connection hole 12 comprises a round hole 122 and two engaging segments 124. The round hole 122 has an inner surface and a diameter. The engaging segments 124 are formed in the inner surface of the round hole 12, and each engaging segment 124 extends toward a direction that is diametrically opposite to the direction of the other engaging segment 124.

The connection device 20 is mounted between and connected to the connection holes 12 in the lenses 10 to connect the lenses 10 with each other and comprises a bridge 22, two plugs 24, two sleeves 26 and two lens screws 28. The bridge 22 is M-shaped and has two ends. The plugs 24 may be metal, are mounted respectively around the ends of the bridge 22 and are mounted respectively in the connection holes 12 in the lenses 10. Each plug 24 comprises an inserting body 242 and two engaging ribs 244. The inserting body 242 is mounted in the round hole 122 of a corresponding one of the connection holes 12 and has a threaded hole 243 defined in the inserting body 242 and screwed with a corresponding one of the lens screws 28. In addition, the inserting body 242 may have an enlarged end exposed out from the corresponding connection hole 12. Accordingly, the enlarged end of the inserting body 242 will abut the lens 10 when the plug 24 is inserted into the connection hole 12. The engaging ribs 244 radially protrude from the inserting body 242 and are mounted respectively in the engaging segments 124 of the corresponding connection hole 12. The sleeves 26 are mounted respectively in the connection holes 12 in the lenses 10 and abut respectively on the plugs 24. The lens screws 28 are mounted respectively through the sleeves 26 and are screwed respectively with the threaded holes 243 in the plugs 24. Preferably, each lens screw 28 comprises a head 282, a tab 283 and a threaded rod 286. The head 282 is cylindrical and has a first end, a second end and an engaging recess 284 formed around the head 282 to form a neck on the head 282. The tab 283 is formed on and protrudes from the first end of the head 282. The threaded rod 286 is formed on and protrudes from the second end of the head 282, extends through a corresponding sleeve 26 and is screwed with the threaded hole 243 in a corresponding plug 24.

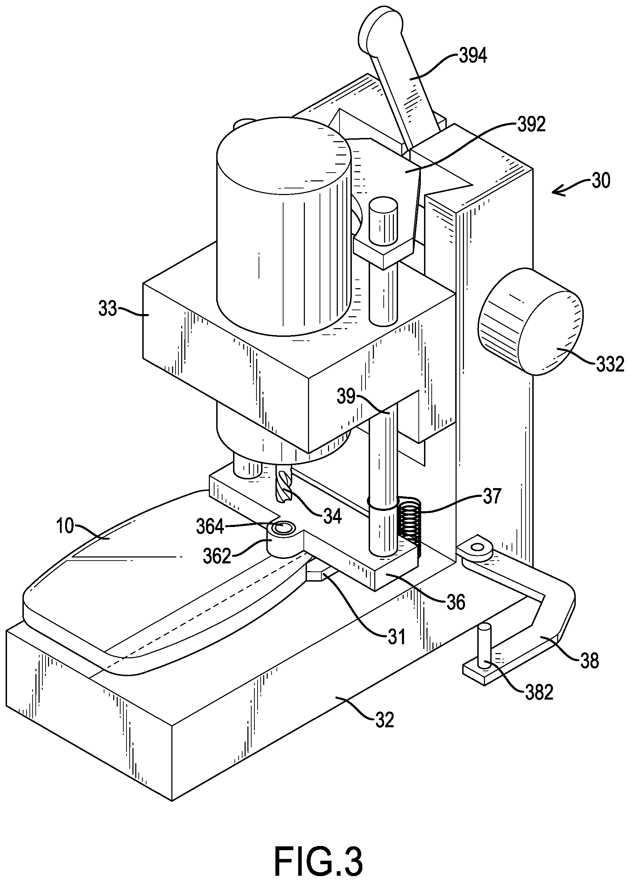

In the manufacturing process for the eyewear, with reference to Figs. 1 and 3, a round hole 122 is defined in a lens 10 by a drilling device 30 firstly. Because the lens 10 is made of a brittle material, such as resin or polycarbonate, a two-stage process is implemented to ensure a drill bit 34 to move along a normal line of the round hole 122 and to prevent the lens 10 from cracking during the process of forming the round hole 122. In the two-stage process, an alignment line that extends through a center of the round hole 122 is drawn on the lens 10. An alignment line is drawn on a table 32 of the drilling device 30 and is aligned with the drill bit 34 of the drilling device 30. The lens 10 is put on the table 32 of the drilling device 30, and the alignment line on the lens 10 is aligned and overlapped with the alignment line on the table 32. Then, a clamping base 36 is moved downward to clamp one end of the lens 10 between the clamping base 36 and the table 32. The clamping base 36 is moveably mounted on the table 32 and has a clamping segment 362, an alignment hole and a drill bush 364. The clamping segment 362 is in a semi-circular section and formed on the clamping base 36. The alignment hole is formed through the clamping segment 362. The drill bush 364 is co-axially mounted in the alignment hole into which the drill bit 34 extends. In addition, a spring 37 is mounted between the table 32 and the clamping base 36 to provide a force to push the clamping base 36 downward for clamping the lens 10.

When the lens 10 is put on the table 32, the clamping base 36 is moved downward to make the clamping segment 362 clamping an end of the lens 10. Because the alignment line of the lens 10 is aligned with the alignment line on the table 32, the contact positions between the clamping segment 362 and the lens 10 have the same distance to the alignment lines. Then, the drill bit 34 is moved downward and extends through the drill bush 364 in the clamping segment 362 of the clamping base 36 to drill a hole in the lens 10. To drill a hole in the lens 10, the drill bit 34 is kept from drilling completely through the lens 10, such that a blind hole that is free from forming through the lens 10 is formed. The remaining segment that corresponds to the blind hole in position and is the portion kept from being drilled through by the drill bit 34 has a predetermined thickness. Preferably, the thickness of the remaining segment may be 0.5 millimeter or half of the thickness of the lens 10, which means the blind hole in each lens 10 has a depth being half of a thickness of the lens 10.

In addition, a positioning tab 31 is mounted on the table 32 or the clamping base 36 and has a tipped end. The positioning tab 31 abuts an end of the lens 10 when the lens 10 is put on the table 32, such that the lens 10 can be positioned at a desired position to ensure the round hole 122 can be formed in a desired location at the lens 10. For example, the round hole 122 is formed at the position where the center of the round hole 122 is distanced from an edge of the lens 10 by 2.8 millimeters. The position of the positioning tab 31 can be changed to fit with the drilling process for different round holes 122 at different locations.

In addition, the drill bit 34 is mounted on a moving base 33 that is mounted moveably on the table 32 of the drilling device 30. A dovetail block-and-recess arrangement is mounted between the table 32 and the moving base 33, and a rack is connected with the dovetail block-and-recess arrangement. Two rotating knobs 332 are mounted on the table 32 and are respectively connected with a pinion that engages the rack. When the rotating knobs 332 are rotated, the moving base 33 will be moved upward or downward relative to the table 32 with the engagement between the rack and the pinion.

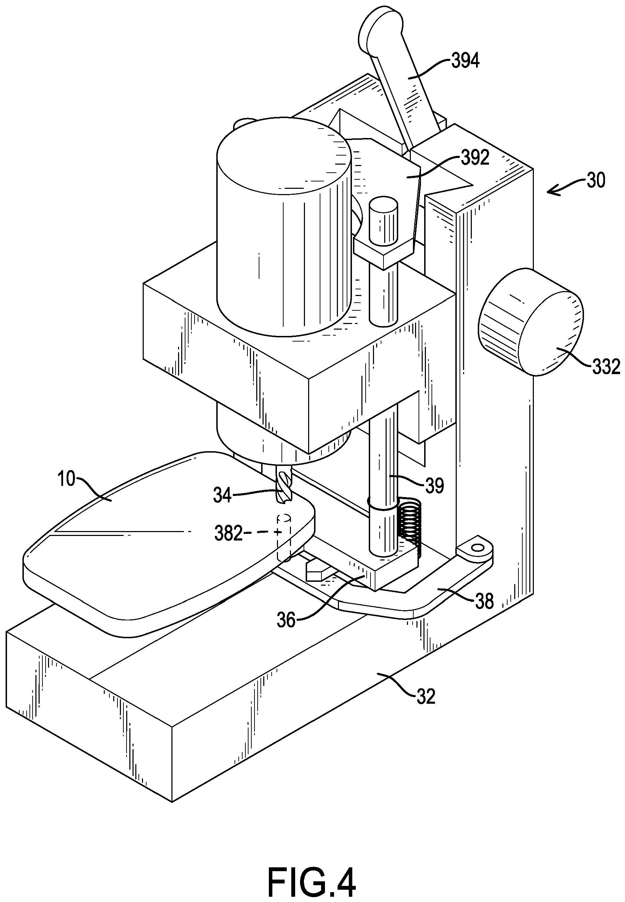

With reference to Fig. 4, after the blind hole is formed, the drill bit 34 is moved upward to a desired position and the clamping base 36 is also moved upward to leave the position where the clamping base 36 clamps the lens 10. Then, the lenses 10 are removed from the table 32, and a pivotal arm 38 that is pivotally mounted on the table 32 is pivoted and moved to align a location pin 382 mounted on the pivotal arm 38 with the drill bush 364 on the clamping base 36. The clamping base 36 is moved downward until the location pin 382 is exposed out of the drill bush 364 from a bottom to a top of the clamping base 36. Then, the lens 10 is turned upside down to dispose the blind hole in the lens 10 to mount around the location pin 382 exposed out of the drill bush 364. The drill bit 34 is moved downward to form the blind hole through the lens 10 so as to form the round hole 122 in the lens 10.

Because the location pin 382 is mounted through the drill bush 364 on the clamping base 36, the location pin 382 can be inherently aligned co-axially with the drill bit 34. When the lens 10 is turned upside down to put the blind hole around the location pin 382, the center of the blind hole can be inherently aligned co-axially with the drill bit 34. Thus, the drill bit 34 can drill through the lens 10 along a normal line of the round hole 122 so as to improve the working quality of forming the round hole 122. With the two-stage process for drilling the round hole 122, the lens 10 can be kept from cracking.

Furthermore, two guiding rods 39 that are parallel with each other are mounted on the table 32, are mounted through the clamping base 36 and are connected to a lifted board 392. A lifting lever 394 is pivotally mounted on the table 32 and has an end abutting a bottom of the lifted board 392. When the lifting lever 394 is pivoted, the lifted board 392 can be moved upward by the lifting lever 394, and the clamping base 36 can be moved upward relative to the table 32. When the lifting lever 394 is released, the clamping base 36 can move downward by the force provided by the spring 37 and the gravity.

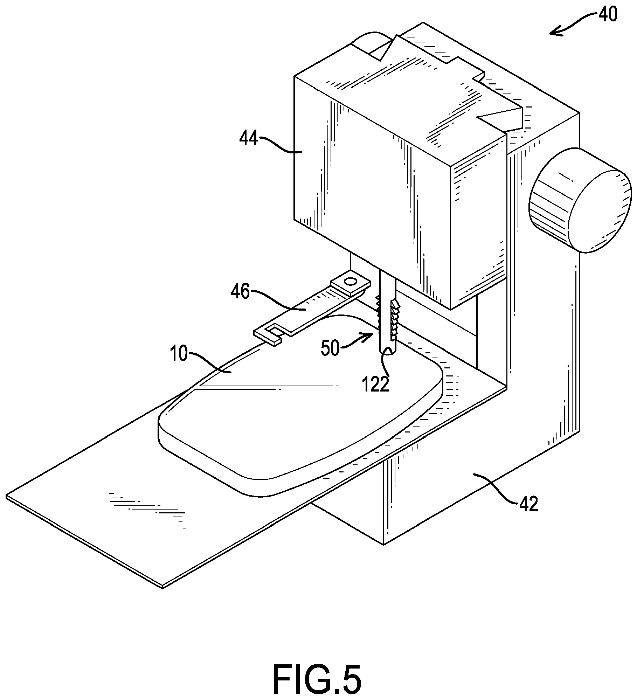

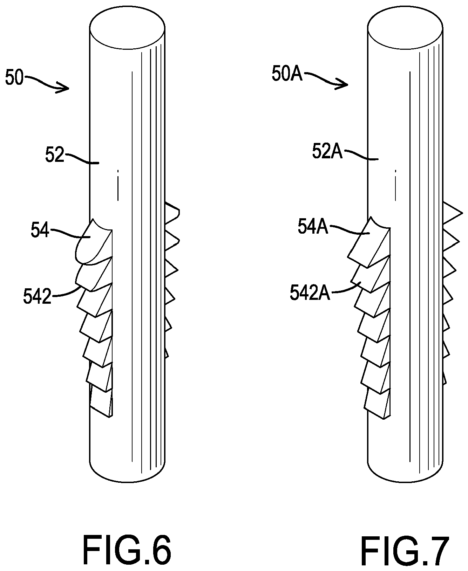

After the act of drilling the round hole 122 in the lens 10, the lens 10 is moved to a cutting device 40 for forming the engaging segments 124 in the lens 10. With reference to Fig. 5, the cutting device 40 has a table 42, a cutter holder 44 and a cutter 50. The cutter holder 44 is movably mounted on the table 42, and a dovetail block-and-recess arrangement is also mounted between the cutter holder 44 and the table 42. With further reference to Figs. 6 and 7, the cutter 50,50A is mounted on a bottom of the cutter holder 44 and has a cylindrical rod 52,52A and two sets of cutting teeth 54,54A. The sets of the cutting teeth 54,54A are formed longitudinally on an outer surface of the cylindrical rod 52,52A respectively at two ends of a diameter of the cylindrical rod 52,52A. Each set of cutting teeth 54,54A has lengths gradually increasing from a bottommost tooth 54,54A to a topmost tooth 54,54A of the set of cutting teeth 54,54A. Each cutting tooth 54,54A has a width same as a width of a corresponding engaging segment 124 formed in the lens 10. Each cutting tooth 54,54A has a flat cutting edge 542,542A formed on a free end of the cutting tooth 54,54A. Accordingly, when the lens 10 is put on the table 42 to align the round hole 122 with the cutter 50,50A, the cutter holder 44 is moved downward and the cylindrical rod 52,52A of the cutter 50,50A is inserted into the round hole 122. Then, two engaging segments 124 will be formed in the inner surface of the round hole 122 by the cutting teeth 54,54A of the cutter 50,50A.

In addition, a lens stripper 46 can be pivotally mounted on the table 42 and has a notch formed in the lens stripper 46 for holding the cutter 50 inside. After the process of forming the engaging segments 124 is completed, the lens stripper 46 is pivoted relative to the table 42 to hold the cutter 50 inside the notch. Consequently, when the cutter holder 44 with the cutter 50 is moved upward, the lens 10 will be stopped by the lens stripper 46 to keep the lens 10 from moving upward with the cutter 50, and the lens 10 can be removed from the cutter 50 conveniently.

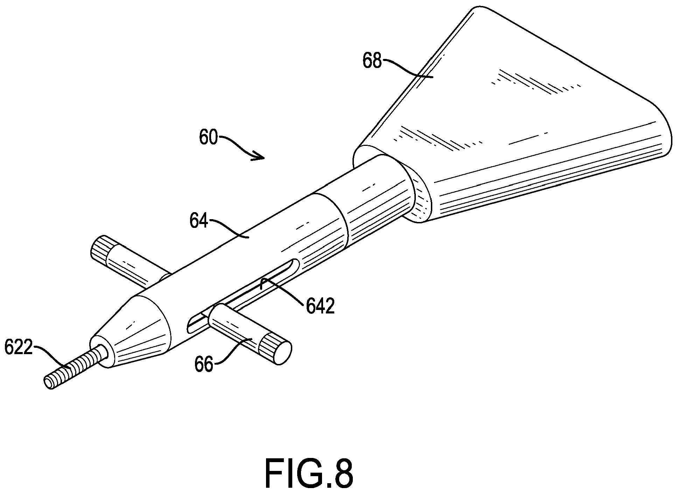

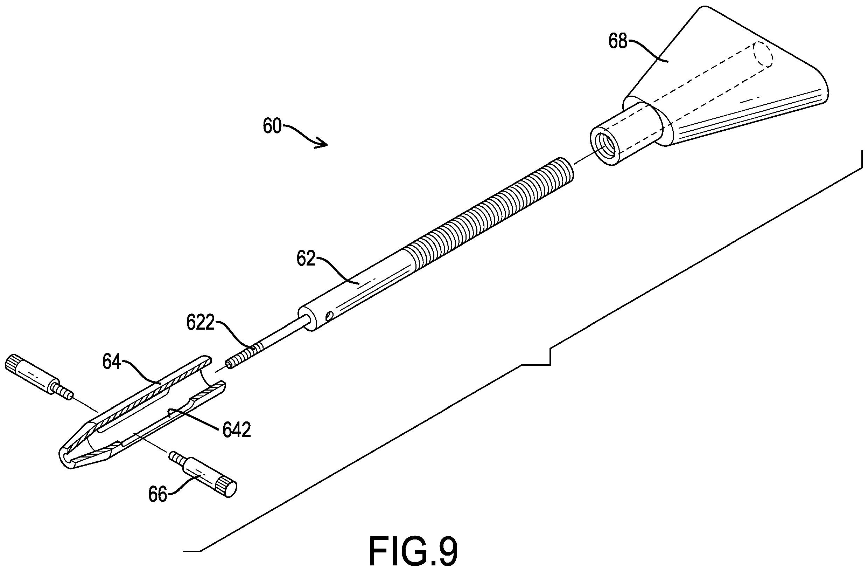

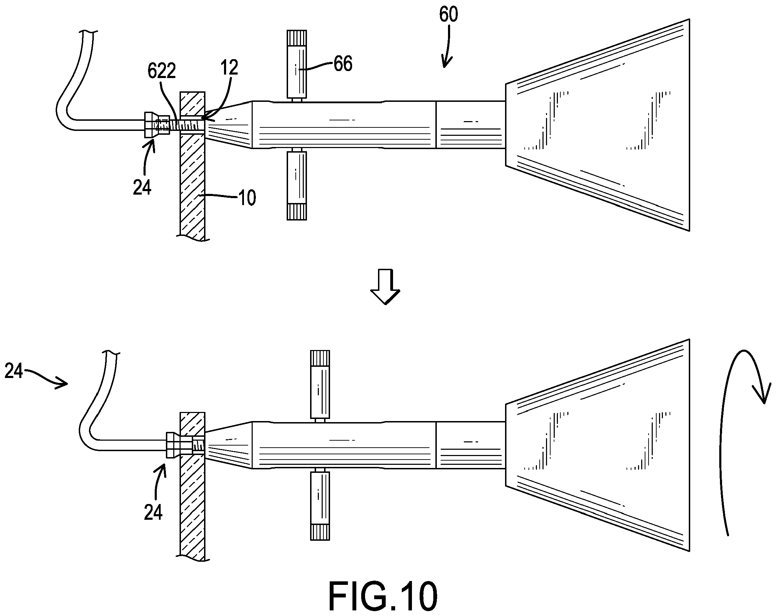

To assemble the lenses 10 with the connection device 20, with reference to Figs. 1 and 8 to 10, a pulling device 60 is applied to insert the plugs 24 into the connection holes 12 in the lenses 10. The pulling device 60 comprises a pulling rod 62, a plastic bush 64, two handles 66 and a driving screw nut 68. The pulling rod 62 has a threaded segment 622 formed on one end of the pulling rod 62 and screwed selectively with the threaded hole 243 in the plug 24. The plastic bush 64 is mounted around the pulling rod 62, and the threaded segment 622 of the pulling rod 62 extends out of one end of the plastic bush 64. The plastic bush 64 has two guiding slots 642 longitudinally formed in the plastic bush 64 and parallel with each other. The handles 66 are inserted respectively into the guiding slots 642 and are connected to the pulling rod 62. The driving screw nut 68 is connected to the pulling rod 62 in a threaded manner and at an end of the pulling rod 62 opposite to the threaded segment 622. With the pulling device 60, the threaded segment 622 of the pulling rod 62 is mounted through the connection hole 12 in the lens 10 and is screwed with the threaded hole 243 in the plug 24. The inserting body 242 and the engaging ribs 244 are aligned respectively with the round hole 122 and the engaging segments 124 of the connection hole 12, the handles 66 are then pulled along the guiding slots 642 to pull the inserting body 242 and the engaging ribs 244 respectively into the round hole 122 and the engaging segments 124 of the connection hole 12. Accordingly, the plugs 24 can be pulled and inserted into the connection holes 12 in the lens 10.

Preferably, the inserting body 242 of the plug 24 may have a diameter slightly larger than that of the round hole 122 of the connection hole 12. Thus, the inserting body 242 will be slightly deformed and bent when the inserting body 242 is inserted into the round hole 122 of the connection hole 12 and abuts tightly against the inner surface of the round hole 122. Accordingly, the combination between the plug 24 and the connection hole 12 can be enhanced.

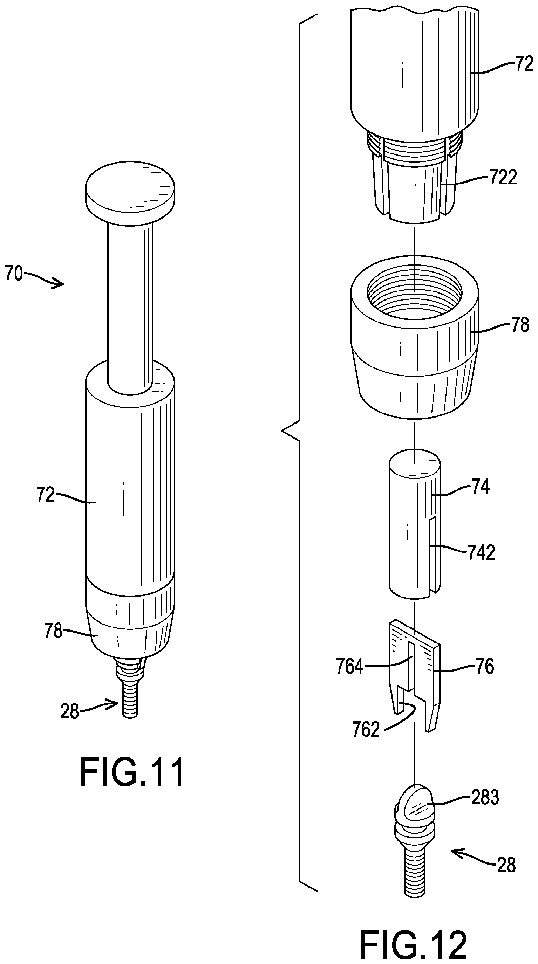

The sleeves 26 are mounted respectively into the round holes 122 in the connection holes 12, and the lens screws 28 are screwed with the threaded holes 243 in the plugs 24 by a screw driver 70 as shown in Figs. 11 and 12. The screw driver 70 comprises a body 72, a driving rod 74, a gripper 76 and a lock nut 78. An opening is defined in an end of the body 72 for holding the driving rod 74 inside, and multiple resilient slits 722 are formed in the end of the body 72 and communicate with the opening. The driving rod 74 is cylindrical and has a driving slot 742 formed in one end of the driving rod 74. The gripper 76 is mounted in the driving slot 742 in the driving rod 74 and has a gripping notch 762 defined in the gripper 76 and a resilient slit 764 formed in the gripper 76 and communicating with the gripping notch 762. The lock nut 78 is screwed with the body 72 to hold the driving rod 74 and the gripper 76 in the end of the body 72 in which the opening is defined.

With the screw driver 70, the tab 283 of the lens screw 28 is held in the gripping notch 762 in the gripper 76 and the driving slot 742 in the driving rod 74. When the body 72 is rotated, the lens screw 28 is also rotated to screw with the threaded hole 243 in the plug 24 and to enable the head 282 of the lens screw 28 to abut the lens 10. Accordingly, the process of assembling the lens 10 with the connection device 20 is complete. Because the lens screw 28 has a specific form, the lens screws 28 can be prevented from being rotated by conventional tools, such that the connection device 20 can be kept from being detached from the lenses 10 by loosening the lens screws 28 unintentionally.

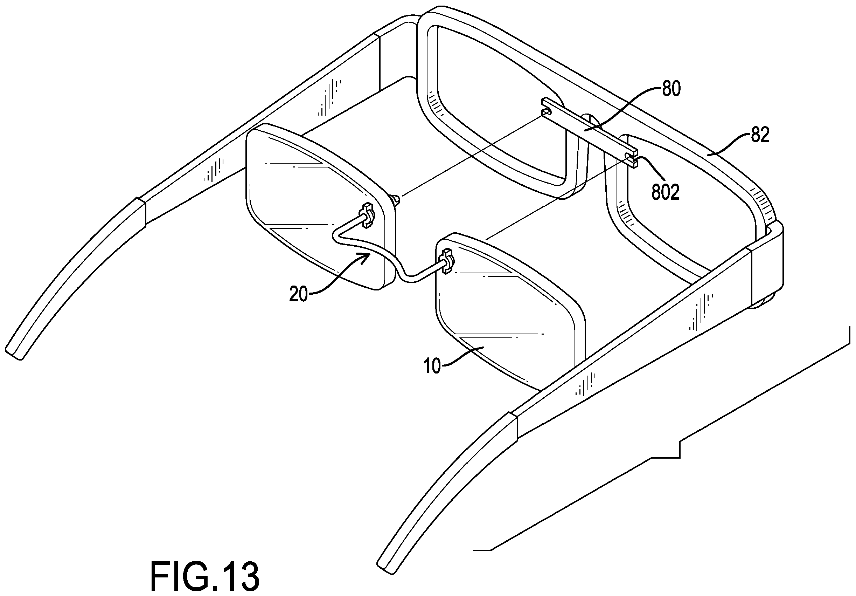

With reference to Figs. 1 and 13, the eyewear in accordance with the present invention can be combined with a lens frame 82 having an anchor plate 80. The anchor plate 80 has two connection notches 802 formed respectively in two ends of the anchor plate 80 and selectively engaging the engaging recesses 284 formed in the lens screws 28. Accordingly, the eyewear can be combined with different lens frames 82 in different shapes, colors or types conveniently and is versatile in use. Therefore, the modular eyewear in accordance with the present invention can be customized at a lowered cost. Preferably, the distance between the connection notches 802 is smaller than that between the lens screws 28. When the anchor plate 80 is connected with the lens screws 28, the engaging recess 284 in one of the lens screws 28 is engaged with a corresponding connection notch 802 in the anchor plate 80 firstly. With the resilience provided by the M-shaped bridge 22, the lens 10 on which the other lens screw 28 is mounted is slightly pivoted to enable the engaging recess 284 in the lens screw 28 to engage the other connection notch 802 in the anchor plate 80.

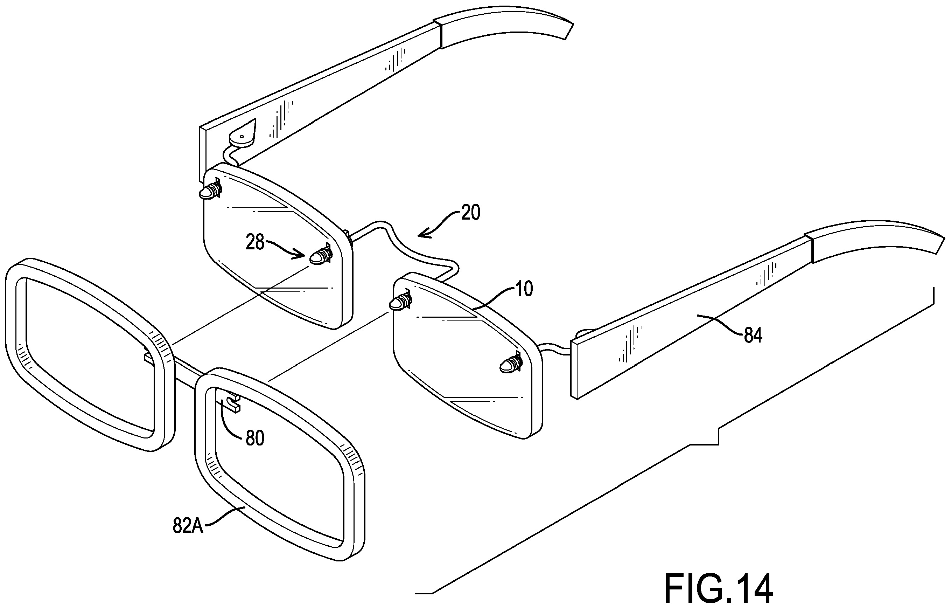

With reference to Fig. 14, two connection holes 12 are formed in each lens 10, wherein one of the connection holes 12 is applied to connect with the connection device 20 and the other one is applied to connect with a temple 84. The connection between the lens 10 and the temple 84 can be the same as that between the lens 10 and the connection device 20. Accordingly, a rimless glass is provided to allow a user to wear directly, and a lens frame 82A with an anchor plate 80 can be combined with the rimless glass to fit with different users' needs.

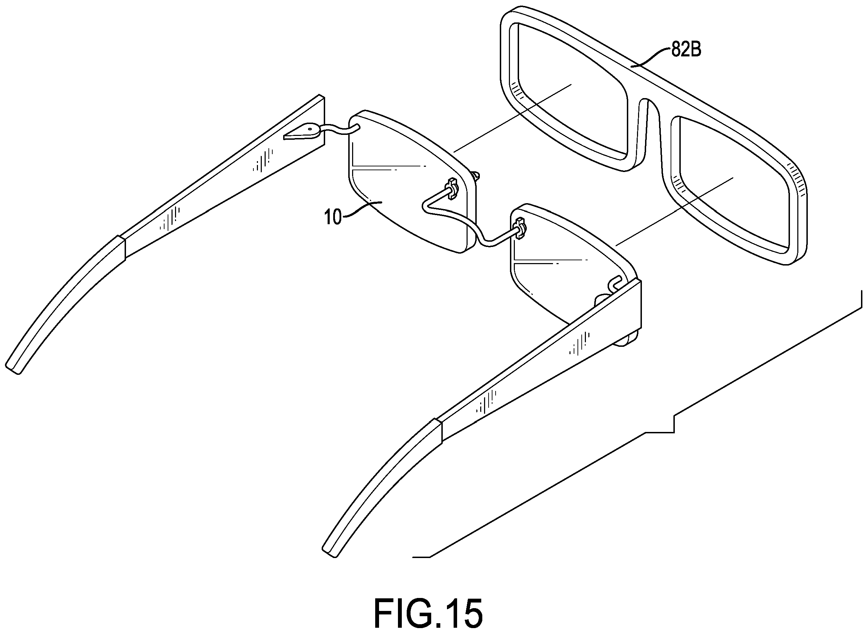

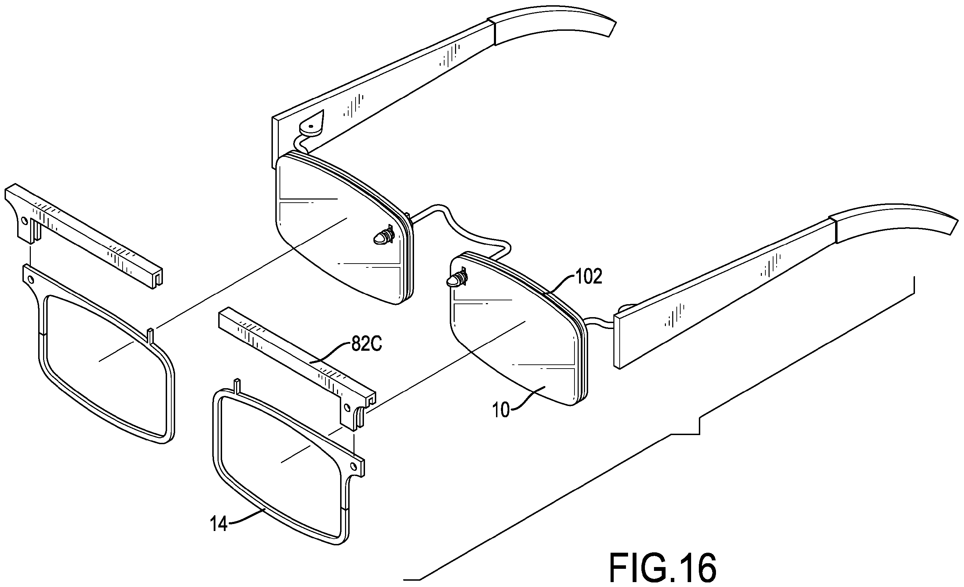

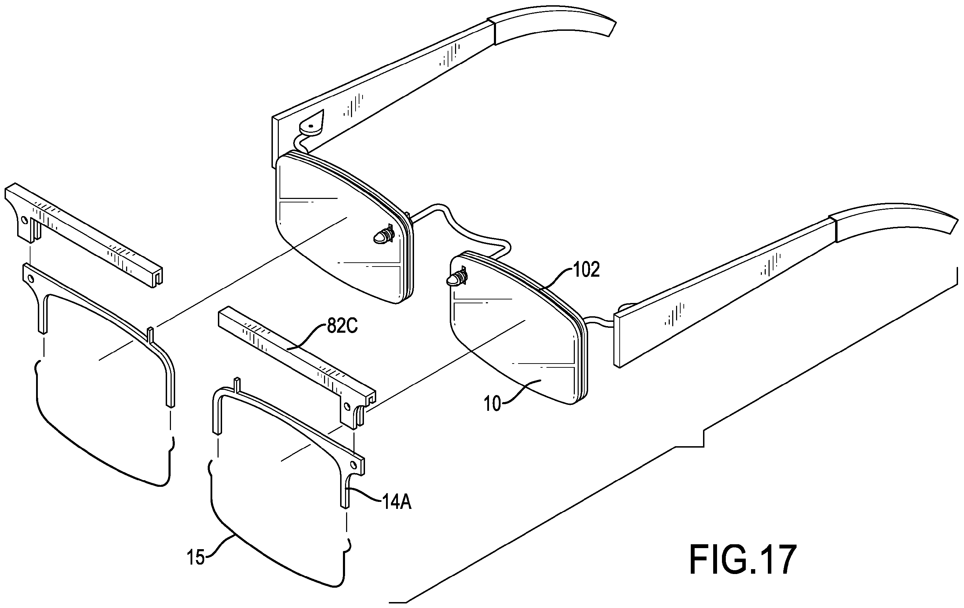

With reference to Fig. 15, the modular eyewear in accordance with the present can be combined with a lens frame 82B without an anchor plate 80. In this embodiment, the lenses 10 are mounted in the lens holes in the lens frame 82B respectively. With reference to Fig. 16, in another embodiment, a combining groove 102 is disposed around each lens 10, and a combination frame 14 is mounted in and protrudes out from the combining groove 102 and has a thickness same as that of the combining groove 102. The combination frame 14 can be cut down at the side of the combination frame 14 to form two ends engaging each other by hooks and loops. With such an arrangement, the combination frame 14 can be conveniently mounted in the combining groove 102 in the lens 10 to combine with different lens frames 82C in different types. With reference to Fig. 17, the combination frame 14A is a semi-run of the periphery of the lens 10 and is substantially inverted U-shaped. A connection string 15 may be made of nylon, is mounted in the combining groove 102 and is connected to the combination frame 14A to form a complete loop form mounted around the lens 10 so as to combine with a lens frame 82C.

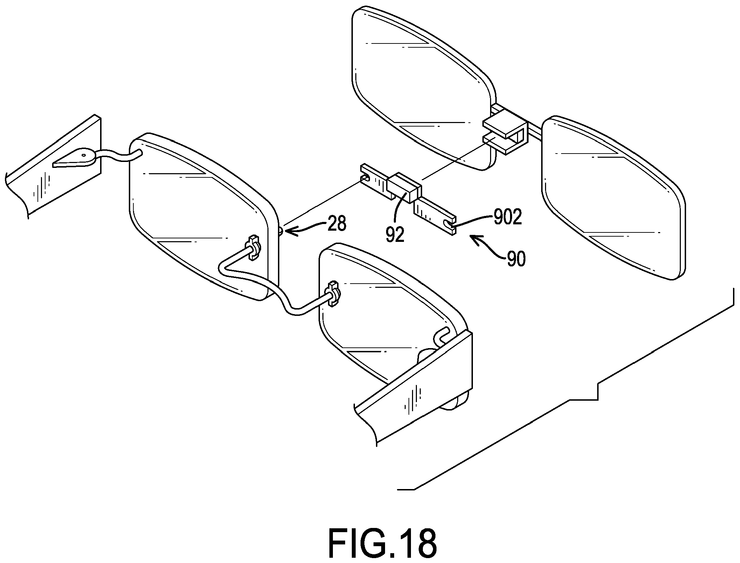

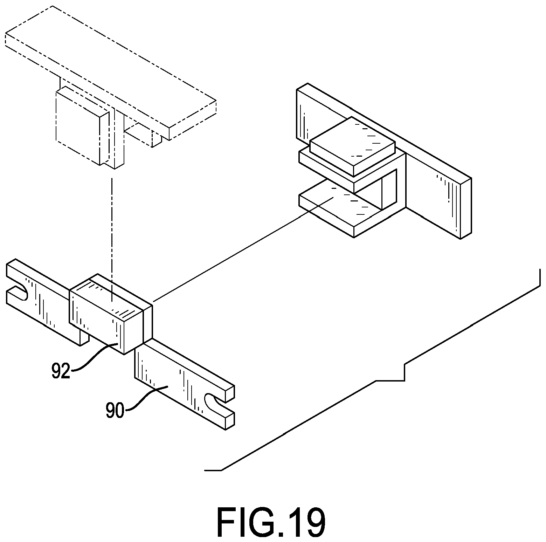

With reference to Fig. 18, the modular eyewear can be combined with a coupling member 90 having a magnet 92. The coupling member 90 has a magnet mount formed on and protruding from a middle of the coupling member 90 and on which the magnet 92 is mounted, and a recess is formed in the middle of the coupling member 90. Two connection notches 902 are formed respectively in two ends of the coupling member 90 to engage the engaging recesses 284 with the lens screws 28. Accordingly, the coupling member 90 is connected with the eyewear to enable the eyewear to combine with an accessory having a magnet by the coupling member 90. With reference to Fig. 19, the coupling member 90 can also be combined with an accessory having two magnets to enable the accessory to be flipped up or down relative to the eyewear.

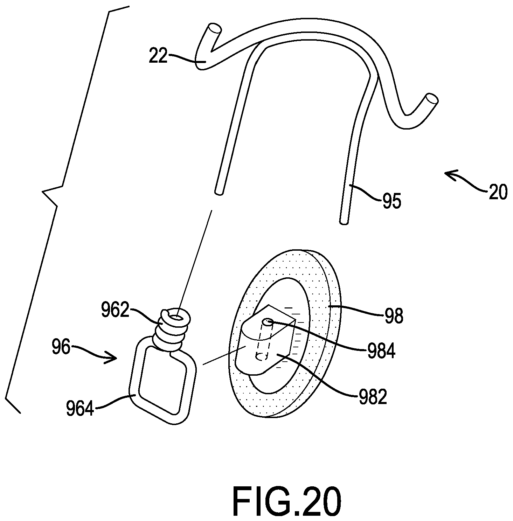

With reference to Fig. 20, a pad frame 95 is connected with the bridge 22 of the connection device 20. The pad frame 95 is inverted U-shaped, is connected to the bridge 22 and has two ends. Two pad mounts 96 are respectively around the ends of the pad frame 95, and each pad mount 96 has a coil segment 962 and a pad bracket 964. The coil segment 962 is mounted securely around a corresponding end of the pad frame 95, and the coil segments 962 of the pad mounts 96 respectively have a spiral direction opposite to each other, such as clockwise and counterclockwise. Each coil segment 962 has an inner diameter slightly smaller than an outer diameter of the corresponding end of the pad frame 95. The pad bracket 964 is rectangular and is formed integrally on one end of the coil segment 962. Two nose pads 98 are connected respectively with the pad mounts 96, and each nose pad 98 has a securing block 982 and a connection hole 984. The pad bracket 964 is mounted loosely around the corresponding securing block 982. The connecting hole 984 is formed through the securing block 982 and into which a corresponding end of the pad frame 95 extends. Accordingly, the nose pads 98 are connected with the bridge 22. In addition, with the coil segments 962 mounted around the ends of the pad frame 95, the nose pads 98 are moveably but securely connected to the pad frame 95, so the positions of the nose pads 98 on the pad frame 95 are both longitudinally and angularly adjustable.

## Claims

1. A modular eyewear comprising:
two lenses (10), each lens (10) having a noncircular connection hole (12) defined through the lens (10);
a connection device (20) mounted between and connected to the connection holes (12) in the lenses (10) to connect the lenses (10) with each other and comprising two lens screws (28);
a bridge (22) being M-shaped and having two ends;
two plugs (24) mounted respectively around the ends of the bridge (22) and mounted respectively in the connection holes (12) in the lenses (10); wherein the connection hole (12) in each lens (10) comprises
a round hole (122) having an inner surface and a diameter; and
two engaging segments (124) formed in the inner surface of the round hole (122), and each engaging segment (124) extending toward a direction that is diametrically opposite to the direction of the other engaging segment (124); and
each plug (24) is made of metal and comprises
an inserting body (242) mounted in the round hole (122) of a corresponding one of the connection holes (12) and having a threaded hole (243) defined in the inserting body (242) into which a corresponding lens screw (28) is screwed; and
two engaging ribs (244) protruding from the inserting body (242) and mounted respectively in the engaging segments (124) of the corresponding connection hole (12);
two sleeves (26) mounted respectively in the connection holes (12) in the lenses (10) and abutting respectively on the plugs (24);
the two lens screws (28) being mounted respectively through the sleeves (26) and screwed respectively with the plugs (24);
a pad frame (95) being inverted U-shaped, connected to the bridge (22) and having two ends;
two pad mounts (96) respectively around the ends of the pad frame (95), and each pad mount (96) having
a coil segment (962) provided at an upper end of the respective pad mount (96), wherein the coil segments (962) respectively has a spiral direction opposite to each other; and
a pad bracket (964) being rectangular and formed on one end of the coil segment (962); and
two nose pads (98) connected respectively with the pad mounts (96), and each nose pad (98) having
a securing block (982); the pad bracket (964) mounted loosely around the corresponding securing block (982); and
a connecting hole (984) formed through the securing block (982) and into which a corresponding end of the pad frame (95) extends.

2. The eyewear as claimed in claim 1, wherein the inserting body (242) of each plug (24) has an enlarged end exposed out from the corresponding connection hole (12).

3. The eyewear as claimed in claim 1, wherein
each lens screw (28) comprises
a head (282) being cylindrical and having a first end, a second end and an engaging recess (284) formed around the head (282) to form a neck on the head;
a tab (283) formed on and protruding from the first end of the head (282); and
a threaded rod (286) formed on and protruding from the second end of the head (282), extending through a corresponding one of the sleeves (26), and screwed with the threaded hole (243) in a corresponding one of the plugs (24).

## Patentansprüche

1. Eine modulare Brille, die aufweist:
Zwei Brillengläser (10), wobei jedes Brillenglas (10) ein nicht kreisförmiges Verbindungsloch (12) aufweist, welches durch das Brillenglas (10) definiert ist;
eine zwischen den Verbindungslöchern (12) in den Brillengläsern (10) angebrachte und mit ihnen verbundene Verbindungseinrichtung (20), um die Brillengläser (10) miteinander zu verbinden und welche zwei Brillenglasschrauben (28) aufweist; sowie
eine M-förmige Brücke (22) mit zwei Enden; und
zwei Verbindungselemente (24), welche jeweils um die Enden der Brücke (22) und in den jeweiligen Verbindungslöchern (12) in den Brillengläsern (10) montiert sind;
wobei das Verbindungsloch (12) in jedem Brillenglas (10) ein Rundloch (122) aufweist, welches eine Innenfläche und einen Durchmesser hat, sowie zwei Eingriffssegmente (124), welche in der Innenfläche des Rundloches (122) ausgebildet sind und wobei sich jedes Eingriffssegment (124) in eine Richtung erstreckt, die diametral entgegengesetzt zu der Richtung des anderen Eingriffssegmentes (124) ist;
wobei jedes Verbindungselement (24) aus Metall besteht und einen Einführkörper (242) aufweist, der im Rundloch (122) einer der entsprechenden Verbindungslöchern (12) angebracht ist und ein Gewindeloch (243) aufweist, das im Einführkörper (242) definiert ist und in welches eine entsprechende Brillenglasschraube (28) geschraubt wird; und
zwei Eingriffsrippen (244), die von dem Einführkörper (242) vorstehen und jeweils in den Eingriffssegmenten (124) des entsprechenden Verbindungslochs (12) angebracht sind;
zwei Hülsen (26), die jeweils in den Verbindungslöchern (12) in den Brillengläsern (10) angebracht sind und jeweils an den Verbindungselementen (24) anliegen;
zwei Brillenglasschrauben (28), die jeweils durch die Hülsen (26) montiert und jeweils mit den Verbindungselement (24) verschraubt sind;
ein Padrahmen (95), der umgekehrt-U-förmig ist, mit der Brücke (22) verbunden ist und zwei Enden aufweist;
zwei Padhalteeinrichtungen (96) jeweils um die Enden des Padrahmens (95), und jede Padhalteeinrichtung (96) weist ein Wicklung-Segment (962) auf, das an einem oberen Ende der jeweiligen Padhalteeinrichtung (96) vorgesehen ist, wobei die Wicklung-Segmente (962) jeweils einander entgegengesetzte Wickelrichtungen haben; und
ein Padhalter (964), der rechteckig ist und auf einem Ende des Wicklung-Segmentes (962) ausgebildet ist,
und zwei Nasenpads (98), die jeweils mit den Padhalteeinrichtungen (96) verbunden sind, und jedes Nasenpad (98) einen Sicherungsblock (982) aufweist; wobei der Padhalter (964) locker um den jeweiligen Sicherungsblock (982) angebracht ist;
und ein Verbindungsloch (984), das durch den Sicherungsblock (982) ausgebildet ist und in das sich ein entsprechendes Ende des Padrahmens (95) erstreckt.

2. Die Brille gemäß Anspruch 1, wobei der Einführkörper (242) jedes Verbindungselements (24) ein vergrößertes Ende aufweist, das aus dem entsprechenden Verbindungsloch (12) herausragt.

3. Die Brille gemäß Anspruch 1, wobei jede Brillenglasschraube (28) einen Kopf (282) aufweist, welcher zylindrisch ist und ein erstes Ende, ein zweites Ende und eine Eingriffsaussparung (284) aufweist, welche um den Kopf (282) herum ausgebildet ist, um eine Einschnürung am Kopf zu bilden;
sowie eine Lasche (283), welche am ersten Ende des Kopfes (282) ausgeformt ist und von diesem hervorsteht; und
eine Gewindestange (286), welche am zweiten Ende des Kopfes (282) ausgeformt ist, von diesem hervorsteht, sich durch eine der entsprechenden Hülsen (26) erstreckt und mit dem Gewindeloch (243) in einem entsprechenden der Verbindungselemente (24) verschraubt ist.

## Revendications

1. Lunettes modulaires comprenant :
deux verres (10), chaque verre (10) ayant un trou de raccordement non circulaire (12) défini à travers le verre (10) ;
un dispositif de raccordement (20) monté entre et raccordé aux trous de raccordement (12) dans les verres (10) afin de raccorder les verres (10) entre eux et comprenant :
deux vis de verre (28) ;
un pont (22) en forme de M et ayant deux extrémités ;
deux bouchons (24) montés respectivement autour des extrémités du pont (22) et montés respectivement dans les trous de raccordement (12) dans les verres (10) ; dans lesquelles le trou de raccordement (12) dans chaque verre (10) comprend :
un trou rond (122) ayant une surface interne et un diamètre ; et
deux segments de mise en prise (124) formés dans la surface interne du trou rond (122), et chaque segment de mise en prise (124) s'étendant vers une direction qui est diamétralement opposée à la direction de l'autre segment de mise en prise (124) ; et
chaque bouchon (24) est réalisé à partir de métal et comprend un corps d'insertion (242) monté dans le trou rond (122) d'un trou correspondant des trous de raccordement (12) et ayant un trou fileté (243) défini dans le corps d'insertion (242) dans lequel une vis de verre (28) correspondante est vissée ; et
deux nervures de mise en prise (244) faisant saillie du corps d'insertion (242) et respectivement montées dans les segments de mise en prise (124) du trou de raccordement (12) correspondant ;
deux manchons (26) respectivement montés dans les trous de raccordement (12) dans les verres (10) et venant respectivement en butée sur les bouchons (24) ;
les deux vis de verre (28) étant respectivement montées à travers les manchons (26) et respectivement vissées avec les bouchons (24) ;
un cadre de tampon (95) en forme de U inversé, raccordé au pont (22) et ayant deux extrémités ;
deux supports de tampon (96) respectivement autour des extrémités du cadre de tampon (95), et chaque support de tampon (96) ayant :
un segment hélicoïdal (962) prévu au niveau d'une extrémité supérieure du support de tampon (96) respectif, dans lesquelles les segments hélicoïdaux (962) ont respectivement une direction en spirale opposée ; et
un support de tampon (964) rectangulaire et formée sur une extrémité du segment hélicoïdal (962) ; et
deux tampons de nez (98) respectivement raccordés avec les supports de tampon (96), chaque tampon de nez (98) ayant :
un bloc de fixation (982) ; la console de tampon (964) étant montée sans serrage autour du bloc de fixation (982) correspondant ; et
un trou de raccordement (984) formé à travers le bloc de fixation (982) et dans lequel une extrémité correspondante du cadre de tampon (95) s'étend.

2. Lunettes selon la revendication 1, dans lesquelles le corps d'insertion (242) de chaque bouchon (24) a une extrémité agrandie exposée à partir du trou de raccordement (12) correspondant.

3. Lunettes selon la revendication 1, dans lesquelles chaque vis de verre (28) comprend :
une tête (282) qui est cylindrique et ayant une première extrémité, une seconde extrémité et un évidement de mise en prise (284) formé autour de la tête (282) afin de former un col sur la tête ;
une languette (283) formée sur et faisant saillie de la première extrémité de la tête (282) ; et
une tige filetée (286) formée sur et faisant saillie de la seconde extrémité de la tête (282), s'étendant à travers un manchon correspondant des manchons (26), et vissée avec le trou fileté (243) dans un bouchon correspondant des bouchons (24).
